(19) Europäisches Patentamt

European Patent Office

Office européen des brevets

(11) EP 1 970 856 A2

(12) EUROPEAN PATENT APPLICATION

(43) Date of publication:
17.09.2008 Bulletin 2008/38

(51) Int Cl.:
*G06Q 40/00* (2006.01)

(21) Application number: 08102566.0

(22) Date of filing: 13.03.2008

(84) Designated Contracting States:
AT BE BG CH CY CZ DE DK EE ES FI FR GB GR
HR HU IE IS IT LI LT LU LV MC MT NL NO PL PT
RO SE SI SK TR
Designated Extension States:
AL BA MK RS

(30) Priority: 16.03.2007 TW 96109015
07.05.2007 TW 96116081

(71) Applicant: Shacom.Com INC.
Jhongsiao E. Rd.
Taipei 115 (TW)

(72) Inventor: Chien, Yung-Sung
Taipei 115 (TW)

(74) Representative: Dossmann, Gérard
Bureau D.A. Casalonga-Josse
Bayerstrasse 71/73
80335 München (DE)

(54) **Method and system for constructing an online customer-directed interest rate deposit and loan platform**

(57) A method and system for an online customer-directed interest rate deposit and loan platform is disclosed, which applies to electronic direct finance, wherein interest rate competition is performed by a customer and the platform one by one. After logging into the platform, a member determines whether to apply for a credit amount. A member acquiring his credit amount inputs related bidding conditions into a bidding interface of the platform and performs one or several bidding activities with a bank/financial service supplier via an administrating server of the platform. Then, the administrating server of the platform processes settlement and delivery according to the bidding result.

Fig.1

EP 1 970 856 A2

**Description**

The present invention relates to financial services. More specifically, the present invention discloses a method for constructing an online customer-directed interest rate deposit and loan platform.

In the deposit and loan system of traditional finance, people deposit money into a bank to earn interest, and the bank loans money to other people at a higher interest rate. The bank profits from the interest rate difference between deposits and loans. In indirect finance both sides, depositors and borrowers, are affected by information isolation resulting in a relative information advantage for banks. Therefore, financial specialists in indirect finance think bankers milk money from customers by information asymmetry.

ROSCAs are another direct-finance deposit and loan system, which can satisfy desires for loans of small amounts. However, borrowers cannot always get a loan via "bidding". Further, the ROSCA is a barrier that makes it hard for the expectations of depositors and borrowers to be reflected.

With the prosperous development of the internet technology, many physical businesses or services can be electronized. The business of finance, which is so similar to information management, can also be electronified

In the early stages, some visionary bankers introduced computer systems to electronify the traditional financial business to obviously reduce cost and manpower and achieve the objectives of accuracy, rapidity and convenience in the traditional financial business. However, many bankers are not content with that. They think that the current electronized bank is still a close system of the bank and that the current electronized bank has not yet presented the business model of direct finance, wherein information is symmetric for banks and customers. Therefore, many bankers are dedicated to find a solution, wherein all parties should be able to make contact without any barriers, and wherein the consumers should be able to actively participate in determining or deciding interest rates. Using the terminology of electronic business, customized financial products are needed.

A US patent No. 2006/0224502A1 disclosed a "System and Method for Online Peer-to-Peer Banking". However, this patent only enhances the conventional management pattern of financial products and not an optimized deposit and loan mechanism in the Internet age.

In order to overcome the disadvantages of the conventional method in accordance with the purpose of the invention as embodied and broadly described herein, the present invention provides a method for constructing an online customer-directed interest rate deposit and loan platform and system thereof.

The method is applied to an Internet-age electronic business of direct finance and is characterized in that financial products are customized and that deposit and loan interest rates are jointly decided by the customers and the bank/financial service supplier. In contrast to the traditional indirect finance profiting from the interest rate difference, the present invention uses fast and accurate internet technology to create opportunities of virtual contacts for depositors and borrowers and earns service charge thereby without any fund cost.

Based on fast, safe, convenient and equitable internet technology, the present invention provides a method for constructing an online customer-directed interest rate deposit and loan platform and a system thereof to run an electronic financial business and provide customized financial products for consumers. Via a mechanism of repeated online bidding, the interest rate is decided by the consumers themselves. Thereby, the present invention provides a solution for banks or financial service suppliers for problems occurring in traditional indirect finance.

Consumers should possess service rights and depositors and borrowers should be able to customize the financial products they need according to their financial plan. Banks should not single-sidedly determine deposit and loan interest rates but should set a minimum interest rate price and let customers then raise the price according to their eagerness for funds. The present invention overturns the conventional deposit and loan pattern to break through the self-limited and isolated financial system and thus thoroughly solve the problem of information asymmetry in the conventional deposit and loan pattern.

An objective of the present invention is to provide banks or financial service suppliers a customer-directed interest-rate direct-finance operating system. Based on the principle of integrating depositors and borrowers, the platform provider such as a bank or financial service supplier establishes a deposit and loan platform of the present invention on the Internet and takes charge of credit analysis, collateralization, settlement and delivery.

According to their requirement, a consumer inputs the necessary parameters to join the platform, such as a number of terms, a contribution amount, a bid price, etc. The bank or financial service supplier then examines the credit of the consumer. After approval, the deposit and loan platform starts to operate for the consumer. If the consumer does not require a loan, he is a pure depositor and has to accept a base price of the bank. When the consumer has accumulated a sufficient amount of funds and has established his credit, he can bid in the platform for a loan. If the bidding price is accepted by the bank or financial service supplier, the consumer becomes a borrower. If the bidding price is not accepted, the consumer continues to be a depositor and has a higher interest rate. If the consumer requires a credit amount from the very beginning, he has rights and can negotiate with the bank or financial service supplier about the interest rate. On the surface, the abovementioned activity appears that the consumer plays chess with the bank or financial service supplier. In fact, they do not. When the bank confronts numerous consumers, the zero-distance virtual contacts of both depositors and borrowers will be naturally formed, and the supplies of and demands for funds will be equilibrated thereby, and fund operation can thus achieve the highest efficiency.

It is to be understood that both the foregoing general description and the following detailed description are exemplary, and are intended to provide further explanation of the invention as claimed.

The accompanying drawings are included to provide a further understanding of the invention, and are incorporated in and constitute a part of this specification. The drawings illustrate embodiments of the invention and, together with the description, serve to explain the principles of the invention. In the drawings:

Fig.1 is a flowchart of a method for constructing an online customer-directed interest rate deposit and loan platform according to an embodiment of the present invention;

Fig.2 is a flowchart of a log-in process according to an embodiment of the present invention;

Fig.3 is a flowchart of a credit amount application process according to an embodiment of the present invention;

Fig.4 is a flowchart of a bidding process according to an embodiment of the present invention;

Fig.5 is a flowchart of a settlement and delivery process for a depositor member according to an embodiment of the present invention;

Fig.6 is a flowchart of a settlement and delivery process for a borrower member according to an embodiment of the present invention; and

Fig.7 is a diagram schematically showing a system for an online customer-directed interest rate deposit and loan platform according to an embodiment of the present invention.

Reference will now be made in detail to the preferred embodiments of the present invention, examples of which are illustrated in the accompanying drawings. Wherever possible, the same reference numbers are used in the drawings and the description to refer to the same or like parts.

The present invention provides a method for constructing an online customer-directed interest rate deposit and loan platform, wherein an administrating server links to authenticated members via the Internet and provides specified webpages to communicate with the computers of users.

The user refers to one who has been approved to a member. When a member intends to enter the customer-directed interest rate deposit and loan platform, he has to input his account number and password in order to log-in. The platform will verify the membership. After membership verification, the member can apply for a credit amount for attending the bidding activities in the platform. If the platform does not approve the credit amount application of the member, the member can still attend the bidding activities with a membership having no credit amount. In the bidding activities of the platform, a member should input a number of terms, a contribution amount and a bid price of the bid. After logging into the platform, the member can choose not to attend the bidding activities but only looks up data on the platform.

In the bidding activities of the platform, a member inputs a number of terms, a contribution amount and a bid price of the bid. The platform will examine the bid condition. If the platform accepts the input bid condition and confirms the member has a sufficient credit amount, and if the member wins in a bidding activity, the loan is completed, and the member becomes a borrower member. If the platform does not accept the bid condition, the member should determine whether or not to continue bidding. If the member decides to keep on bidding, he inputs a new bid price, number of terms and contribution amount. If the credit amount of the member is insufficient, he may choose to be a depositor member. If the member does not win in the bidding activity, he should determine whether or not to input a new bid price. If the member does not want to input a new bid price, he becomes a depositor member. If the member wants to bid again, he should return to the bid condition webpage. The platform settles the deposit amount of the depositor member, and the depositor member then remits the current deposit amount into the platform. The platform also settles the receivables of the borrower member and then remits the receivables to the borrower member.

The present invention discloses a method for constructing an online customer-directed interest rate deposit and loan platform. An applicant firstly applies for membership. After acquiring membership, a member logs into the platform and applies for a credit amount. After the member acquires his credit amount, he can attend the bidding activities of the platform. Then, the platform undertakes settlement and delivery. The method of the present invention is characterized in having the following steps: a log-in step, a credit amount application step, a bidding step and a settlement and delivery step.

The present invention also discloses a system for an online customer-directed interest rate deposit and loan platform. The system of the present invention comprises an administrating server. The administrating server further comprises: a member information module, a bidding information module, a deposit and loan fund flow module, and a settlement and delivery module. The administrating server can undertake safe and realtime information exchange with members via communication networks, wired communication devices or wireless communication devices and respectively stores data, information and results into a database.

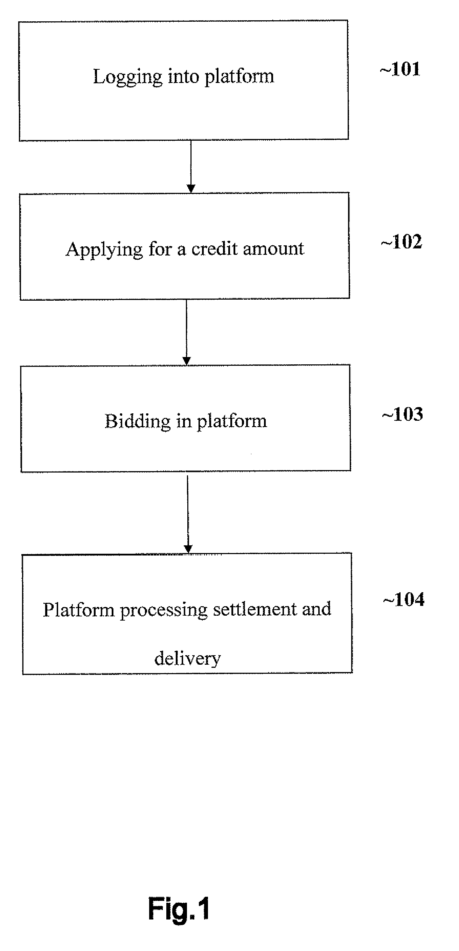

Refer to Fig.1, which is a flowchart of a method for constructing an online customer-directed interest rate deposit and loan platform according to an embodiment of the present invention.

Firstly, an applicant inputs all the fundamental data into the platform and becomes a member after membership examination; then the member inputs his account number and password to log into the platform (step 101). After log-in, the member may choose to attend the bidding activities of the platform and apply for a credit amount (step 102). Next, the member starts to bid in the platform and then becomes a depositor member or a borrower member after a bidding activity (step 103). Then, the platform processes the settlement and delivery of the payables of depositor members and the receivables of borrower members (step 104).

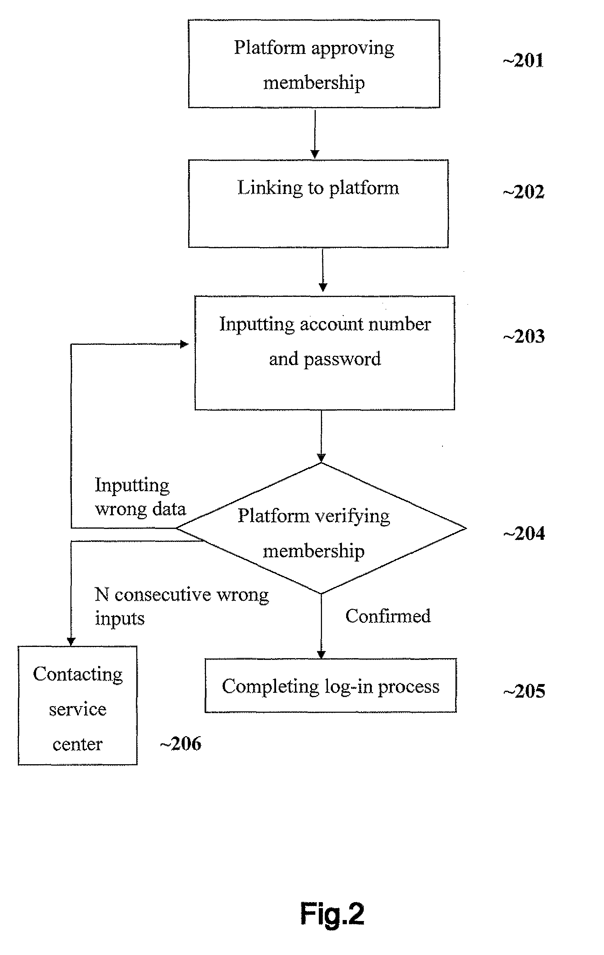

Refer to Fig.2, which is a flowchart of a log-in process according to an embodiment of the present invention.

In the log-in process of the present invention, an applicant applies to the platform for membership and inputs all the fundamental data. After the platform approves membership, the applicant becomes a member and acquires his account number and password (step 201). Next, the member links his computer to the platform via the Internet or a network connection (step 202). Next, the member inputs his account number and password in order to log into the platform (step 203). Next, the platform automatically verifies the membership (step 204). If the platform confirms the membership of the member, the member then completes the log-in process (step 205). If the platform finds that the input account number or password is wrong, the member has to return to step 203 to input his account number and password once again. If the platform finds that the member has input wrong account numbers or passwords a predetermined number of times consecutively, the member has to contact the service center (step 206).

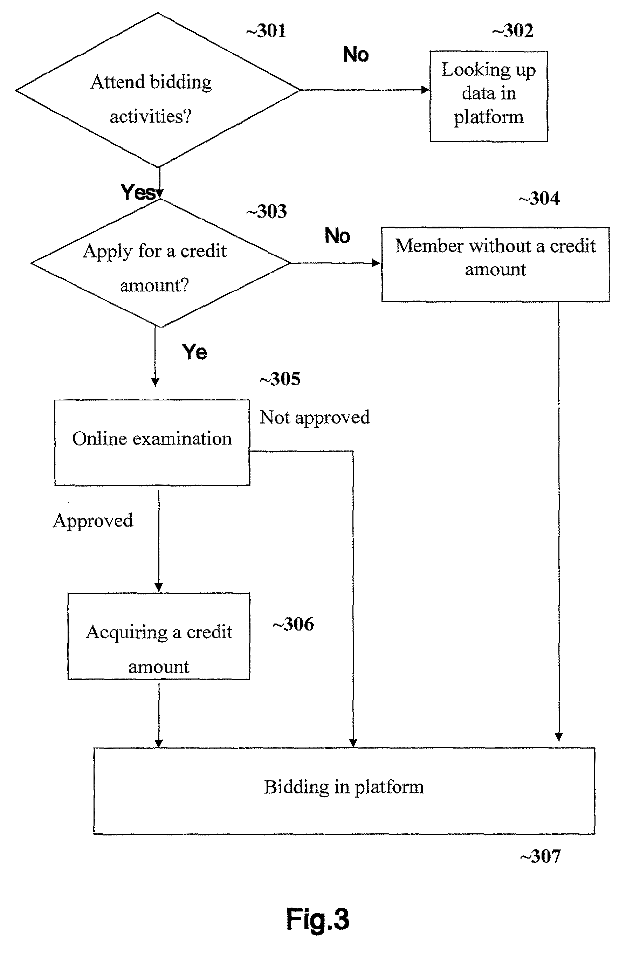

Refer to Fig.3, which is a flowchart of a credit amount application process according to an embodiment of the present invention.

After logging into the platform, the member determines whether or not to attend the bidding activities of the platform (step 301). If the member chooses not to attend the bidding activities, he may look up data in the platform (step 302). If the member decides to attend the bidding activities, he should determine whether to apply for a credit amount according to his own condition (step 303). If the member chooses not to apply for a credit amount, he becomes a member without a credit amount (step 304) and directly proceeds to bid in the platform (step 307). If the member decides to apply for a credit amount, the member has to input related data into the platform, and the platform examines the data online (step 305). If the member does not pass through the examination, he may directly proceed to bid in the platform (step 307). If the member passes through the examination, the member acquires his credit amount (step 306) and then proceeds to bid in the platform (step 307).

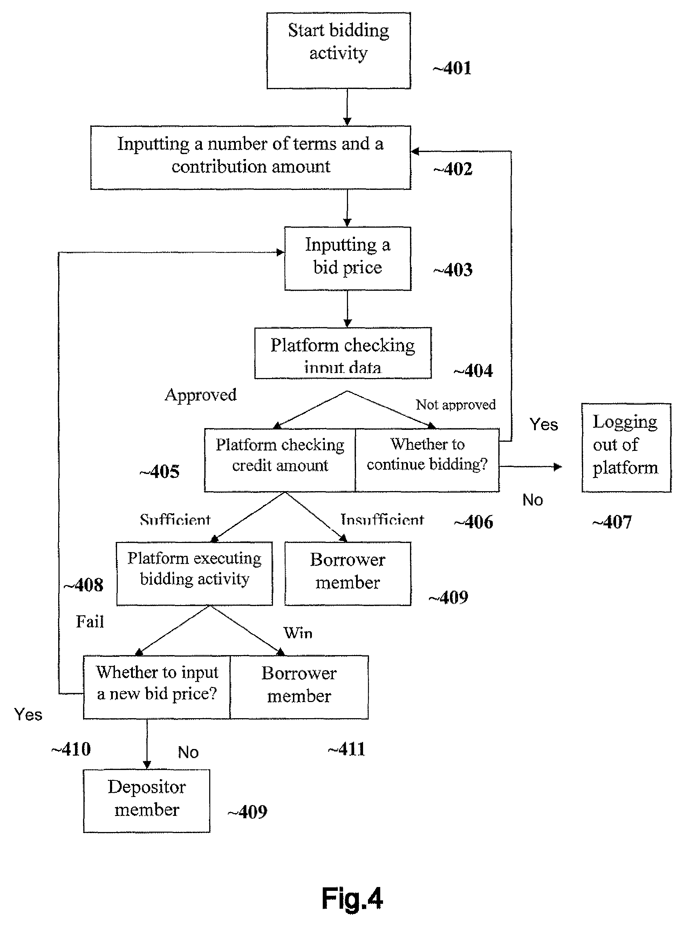

Refer to Fig.4, which is a flowchart of a bidding process according to an embodiment of the present invention. With the approval of the platform, the member can attend the bidding activities of the platform (step 401). The member inputs a number of terms, a contribution amount (step 402) and a bid price (step 403) on the interface provided by the platform. The administrating server sets lower and upper limits for the number of terms, contribution amount and bid price. After the member inputs the data, the platform checks the input data (step 404). If the platform validates the input data, the platform will check whether the credit amount of the member is sufficient (step 405). If the credit amount is sufficient, the platform executes the bidding activities (step 408). The bidding activities will determine the interest rate of the member, wherein the administrating server decides the interest rate according to the demand and supply of funds, the fund balance of the platform owner, the short-term and long-term variation of interest rates, etc. If the member wins in the bidding activities, he becomes a borrower member (step 411). If the member does not pass through the examination in the step 404, he determines whether or not to continue bidding (step 406). If the member decides to keep on bidding, the process returns to the steps 402 and 403, and the member has to input a new bid price, number of terms and contribution amount. If the member decides not to bid any more, he may log-out of the platform (step 407). If the member does not have a sufficient credit amount, he becomes a depositor member (step 409). In the bidding activities of the platform (step 408), if the member does not win, the platform will ask the member whether to return to the step 403 to input a new bid price (step 410). If the member wants to keep on bidding, the member returns to the step 403 to input a new bid price. If the member does not want to bid any more, the process proceeds to the step 409, and he becomes a depositor member.

If the member becomes a depositor member (step 409), he may undertake the steps shown in Fig.4 again in the next stage. The member will not obtain the receivable until he becomes a borrower member (step 411).

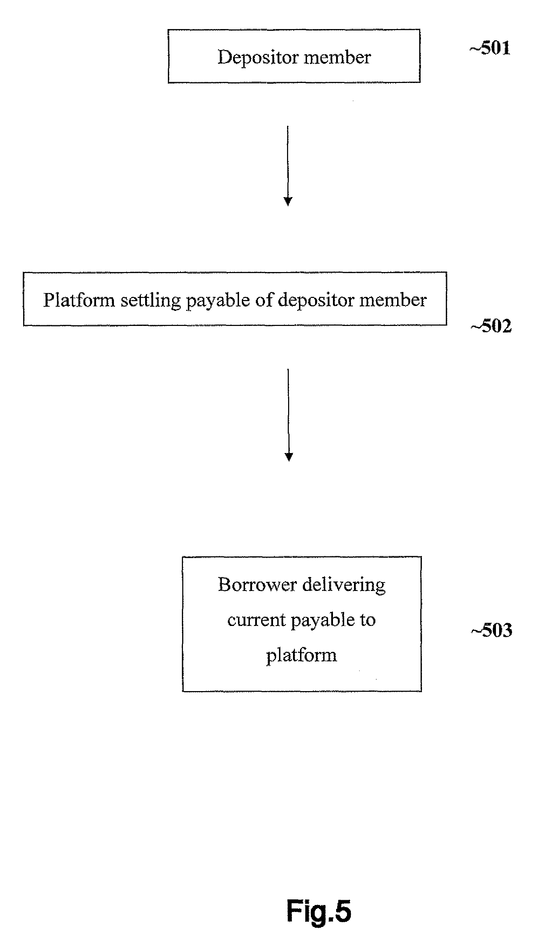

Refer to Fig.5, which is a flowchart of a settlement and delivery process for a depositor member according to an embodiment of the present invention. The platform will settle the payable for a depositor member 501 (step 502). The depositor delivers the payable into the platform before the closing date (step 503) to complete a single settlement and delivery procedure.

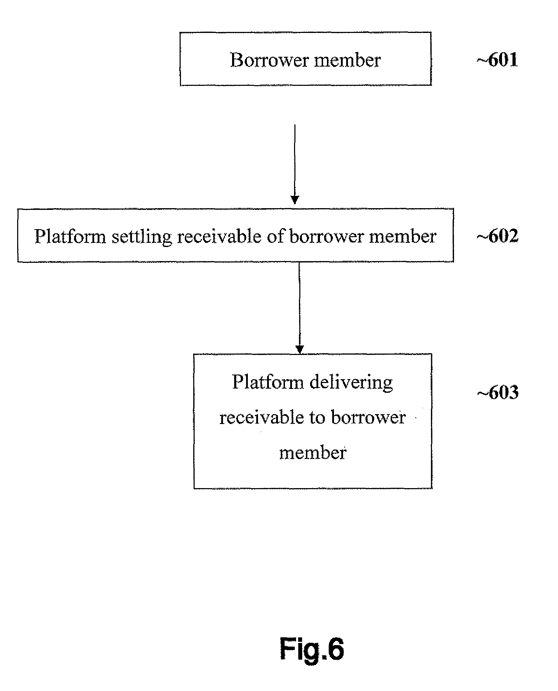

Refer to Fig.6, which is a flowchart of a settlement and delivery process for a borrower member according to an embodiment of the present invention. The platform will settle the receivable for a borrower member 601 (step 602). The platform delivers the receivable to the borrower member before the losing date (step 603) to complete a single settlement and delivery procedure.

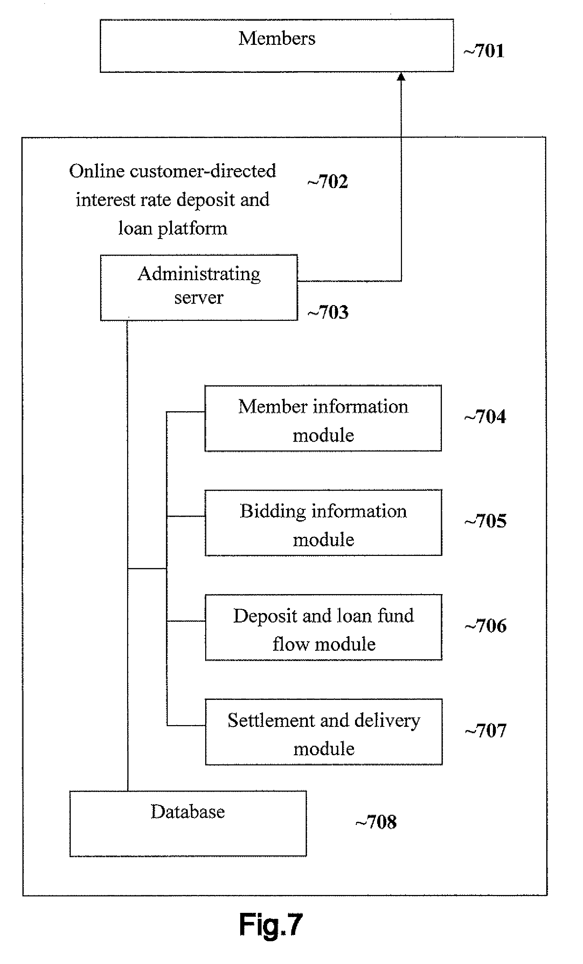

Refer to Fig.7, which is a diagram schematically showing a system for an online customer-directed interest rate deposit and loan platform according to an embodiment of the present invention. The system comprises an administrating server 703, which links to members 701 via the Internet, wired communication devices, wireless communication devices, local area networks. The administrating server examines member applications and provides appropriate credit amounts for them. A member logs into the online customer-directed interest rate deposit and loan platform 702 before attending the bidding activities of the platform. The administrating server also provides an Internet link, whereby members can access the platform via computers, mobile phones, PDA, etc. The system for an online customer-directed interest rate deposit and loan platform of the present invention also comprises four modules: a member information module 704, a bidding information module 705, a deposit and loan fund flow module 706 and a settlement and delivery module 707. The member information module 704 conducts member data acquired by the administrating server when exchanging information with members. The platform uses the information of the member information module 704 to administrate the registration and log-in of members. The bidding information module 705 conducts the bidding information of the platform built by the administrating server, comprising: the bidding data of members, the examination data of the administrating server, etc. The deposit and loan fund flow module 706 conducts the fund flow of the depositors and borrowers and the interest rate of the bids worked out by the administrating server. The settlement and delivery module 707 conducts the settlement and delivery data of the platform.

The administrating server undertakes safe and realtime information exchange with members via communication networks, wired communication devices or wireless communication devices, and respectively stores data, information and results into a database 708.

Below, four embodiments are used to exemplify the present invention.

**Embodiment I**

Suppose Applicant A applies for membership and is approved to be a member (Member A) of the online customer-directed interest rate deposit and loan platform of the present invention. The administrating server of the platform then provides an account number and a password for Member A. Member A can use the account number and password to log into the platform to undertake trading, query, lookup, etc. After Member A has input his account number and password to log into the platform, he cannot yet undertake trading until he passes through the security examination of the platform.

After Member A logs into the platform, he may choose to look up data or to attend the bidding activities of the platform. If Member A chooses to attend the bidding activities of the platform, the administrating server will ask Member A whether he wants to apply for a credit amount. If Member A does not want to apply for a credit amount, he becomes a member with no credit amount. In other words, the administrating server provides a zero credit amount for Member A. In such a case, Member A should be purely an arbitrager or depositor. Therefore, Member A needn't use a credit amount to acquire finance. In this case, the initial credit amount of Member A is very low or even 0. The credit of Member A will be spontaneously created with the accumulation of his deposits and the interest earned in the bidding activities. All the deposits for bids and the interest earned from the bids will be converted into the spontaneously created credit. If the spontaneously created credit is greater than the quantity for the current bid, the member can withdraw the surplus in the bidding process.

If Member A applies for a credit amount, the platform will examine the qualification of Member A. If Member A qualifies, the platform will give Member A an appropriate credit amount according to his requirement. The credit amount is the maximum quantity Member A can borrow in the bidding activities of the platform, and the platform owner will undertake the risk of the bad debt of the member.

If Member A does not qualify for a credit amount, the credit amount of Member A is zero, and the amount he can borrow is the spontaneously created credit.

Member A may attend the bidding activities of the platform according to his wealth management planning. When Member A chooses to bid in the platform, the platform will demand Member A to input a number of terms, a contribution amount and a bid price. After Member A keys in the data and presses the "Enter" button, the platform will examine the input data and determine whether to allow Member A to attend the bidding activities. If the platform does not accept Member A to attend the bidding activities, Member A should determine whether to continue bidding. If Member A does not want to bid any more, he may end his bidding and log out of the platform. When Member A bids or chooses to keep on bidding, the platform will examine the bid condition of Member A. If the platform accepts the bidding of Member A, it will examine whether the quantity of the bidding exceeds the credit amount of Member A. If the quantity of the bidding exceeds the credit amount of Member A, the bidding is invalid, and Member A becomes a depositor member.

When Member A bids or chooses to keep on bidding, the platform will examine the bid condition of Member A. If the platform accepts the bidding of Member A, it will examine whether the quantity of the bidding exceeds the credit amount of Member A. If the quantity of the bidding does not exceed the credit amount of Member A, the bidding is valid, and Member A wins in the bid. Thus, Member A completes his bidding and becomes a borrower member and then acquires the receivable of the bid.

As to being the pure arbitrager or depositor mentioned above, the platform will settle the payable of Member A after the bidding ends. Then, the platform transmits the data of the bidding result and the payable to Member A, and Member A should deliver the current payable to the platform.

If Member A has a valid bid and becomes a borrower member, the platform will settle the receivable of Member A after the bidding ends. Then, the platform transmits the data of the bidding result and the receivable to Member A and delivers the receivable to Member A.

In addition, the member having acquired the receivable of the bid in the preceding term needs to remit the current payable into the platform.

**Embodiment II**

Suppose Member B uses his account number and password to log into the platform. The platform will verify the membership of Member B. After the platform confirms the membership, Member B is allowed to enter the platform. Then, Member B can choose to look up data or attend the bidding activities in the platform. When Member B attends the bidding activities, he may key in a number of terms, a contribution amount and a bid price into the platform according to his wealth management planning and presses the "Enter" key. Then, the platform will examine the input data and determine whether to accept the bid conditions of Member B. The platform will work out the current base bid price with programs before the bidding activities. Determining the base bid price is a dynamic process and is based on the demand and supply of funds, the fund reserve of the platform owner, the short-term and long-term variation of the interest rate.

The bid price of Member B and the base bid price are compared according to the following ways:

1. The bid price of Member B is compared with the base bid price. If the bid price of Member B is lower than the base bid price, the platform does not accept the bid price of Member B.
2. If the bid price of Member B is greater than the base bid price, the platform accepts the bid price of Member B.
3. If the bid price of Member B is equal to the base bid price, the platform also accepts the bid price of Member B.

If the platform accepts the bid condition of Member B, the platform will further check whether the bid exceeds the credit amount of Member B. If the bid does not exceed the credit amount, the bid is valid. Then, Member B ends the bidding and acquires the receivable of the bid.

The receivable of a completed and valid bidding in the current term is worked out from the following equations:

The receivable in the nth term:

$$\text{Equation 1:} \quad An = (U - In) \times ((N - n)) + (U \times (n - 1))$$

or

$$\text{Equation 2:} \quad An = (U \times (N - n)) + (U \times (n - 1)) + \sum_{i=1}^{n-1} Ii$$

wherein $An$ denotes the total receivable of the nth term bid winner,
$U$ denotes the contribution amount,
$N$ denotes the total terms,
$n$ denotes the order of the current term,
$In$ denotes the highest bid price in the nth term, which means
the interest a bid winner is willing to pay in each term.

Suppose Member B attends the bidding with a period of 24 terms and a contribution amount of 10,000 dollars, and suppose Equation 1 is adopted as the rule. The following cases may occur.

1. If Member B attends the bidding activity in the sixth term and inputs a bid price of 1,000 dollars, and if the platform accepts and validates the bidding, Member B can acquire a fund of (10,000 dollars - 1,000 dollars) x (24-6) + 10,000 dollars x (6-1) = 212,000 dollars according to Equation 1.
2. If Member B attends the bidding activity in the sixth term and inputs a bid price of 1,000 dollars, and if the platform does not accept the bidding, and if Member B chooses not to bid any more and ends the bargain, Member B should deliver to the platform the payable of the current term (the sixth term) 9,000 dollars (10,000 dollars-1,000 dollars).

3. If Member B attends the bidding activity in the sixth term and inputs a bid price of 1,000 dollars, and if the platform does not accept the bidding, and if Member B chooses to bid again and inputs a new bid price of 1,200 dollars, and if the platform accepts and validates the new bidding, Member B can acquire a fund of (10,000 dollaars-1,200 dollars) x (24-6) + 10,000 dollars x (6-1) = 208,400 dollars according to Equation 1..

## Embodiment III

Credit comes from the credit amount the platform assigns to a member or is converted from the accumulated deposits and the earned interest-the spontaneously created credit. If Member C is a pure arbitrager or depositor, he need not use a credit amount to acquire finance. In this case, the initial credit amount of Member C is 0. If Member C attends a bid with a period of 20 terms and a contribution amount of 10,000 dollars, the credit of Member C will increase term by term with the accumulated deposits and the earned interest. When the credit is accumulated to 200,000 dollars, Member C can withdraw his fund from the platform.

## Embodiment IV

Determining the base bid price in the online customer-directed interest rate deposit and loan platform is a dynamic process undertaken by the administrating server of the platform according to variables, such as the demand and supply of funds, the fund reserve of the platform owner, the short-term and long-term variation of interest rates, etc.

The base bid price is dynamically determined by the inflow and outflow of massive funds.

When the bid price of a member is lower than the base bid price, the member becomes a depositor of the platform and has to deliver to the platform an amount of the contribution amount minus his bid price. For example, if Member D inputs a bid price of 1,000 dollars, a period of 24 terms and a contribution amount of 10,000 dollars, and if the bid price 1,000 dollars is lower than the base bid price, Member D should deliver to the platform 9,000 dollars (10,000 dollars-1,000 dollars).

Based on the deposit interest rate, the platform may particularly set a base deposit price for depositors. When a depositor chooses not to input a bid price, he should deliver to the platform an amount of the contribution amount minus the base deposit price. For example, if Member E attends a bid with a period of 24 terms and a contribution amount of 10,000 dollars, and if the base deposit price is 800 dollars, and if Member E chooses not to input a bid price, Member E should to the platform an amount of 9,200 dollars (10,000 dollars-800 dollars).

From the above description, the present invention discloses a method and system for an online customer-directed interest rate deposit and loan platform having the flowing advantages:

1. Fast and effectively mass-creating contact opportunities for loaners and borrowers: The present invention applies Internet technology to construct an online deposit and loan platform to integrate existing functions of credit analysis, collateralization, payment and credit surveillance of banks/financial service suppliers to fast and effectively generate mass opportunities that allow customers to directly contact the banks or financial service suppliers, whereby the members of the platform and the banks/financial service suppliers can perform direct-finance fund trading according to their own fund supply or fund demand without using any intermediary agent;

2. Effectively reflecting the fund demand intensity of customers and the fund supply and demand condition in the market: The present invention establishes a dialogue platform for the funds of customers and banks/financial service suppliers, whereby a customer can perform a fund price dialogue with a bank via continual biddings, and whereby the interest rate can effectively reflect the fund demand intensity of the customer and the fund supply and demand condition in the market, and whereby both sides of supply and demand can achieve an equilibrated fund price;

3. Expanding the service area of banks/financial service suppliers: The present invention uses the Internet and the platform to integrate banks and financial service supplies everywhere to break the limits of time and space and provide 24 hour online service, whereby the "right for financial service" can also be spread into remote areas;

4. Providing members with all-customized financial products: The present invention provides members with all-customized financial products, whereby customers can deposit their money into the online deposit and loan platform or acquire money from the online deposit and loan platform according to their financial plannings, wherein the interest rates float with the intensity of personal fund demand and the fund reserve of the financial organizations;

5. Reducing fund operation cost and promoting fund operation efficiency: The present invention uses Internet technology to increase opportunities for customers to directly contact financial organizations and negotiate prices with the financial organizations, whereby fund operation cost is reduced and fund operation efficiency is increased;

6. Creating a voluminous fund supply and demand system via a virtual Internet world to fully reflect the fund competition between consumers and banks; and

7. Providing a safe, accurate, convenient and realtime environment for bidding, settlement and delivery: The present invention provides a safe, accurate, convenient and realtime environment for bidding, settlement and delivery, which applies to most financial organizations and can promote the market acceptability of direct-finance products.

From the above description, the present invention is proved to have improvements over the current electronic finance systems. It is evident that the present invention possesses utility, novelty and non-obviousness and meets the condition for a patent.

It will be apparent to those skilled in the art that various modifications and variations can be made to the present invention without departing from the scope or spirit of the invention. In view of the foregoing, it is intended that the present invention cover modifications and variations of this invention provided they fall within the scope of the invention and its equivalent.

**Claims**

1. A method for constructing an online customer-directed interest rate deposit and loan platform comprising:

    a member logging into said platform;

    said member applying for a credit amount online, and an administrating server of said platform examining said member's qualification for said credit amount;
    said platform providing a bidding interface for said member, and said administrating server of said platform executing a bidding activity; and
    said administrating server of said platform processing settlement and delivery of a bidding result.

2. The method according to claim 1, wherein logging into said platform further comprises:

    an applicant applying for a membership, and said platform accepting said applicant as a member and assigning an account number and a password to said member;

    said member inputting said account number and said password to log into said platform; and
    said administrating server of said platform verifying said account number and said password of said member, and said member then completing a log-in.

3. The method according to claim 1, wherein applying for a credit amount online further comprises:

    said member determining whether to attend a bidding activity of said platform; if said member chooses not to attend said bidding activity, said member looking up data in said platform; if said member chooses to attend said bidding activity, said member determining whether to apply for a credit amount;
    if said member chooses to apply for a credit amount, said administrating server of said platform examining said member's qualification for said credit amount; and
    if said member qualifies for said credit amount, said administrating server of said platform assigning said credit amount to said member, and attending a bidding activity of said platform with said credit amount.

4. The method according to claim 3, wherein applying for a credit amount online further comprises:

    said member determining whether to attend a bidding activity of said platform; if said member chooses not to attend said bidding activity, said member looking up data in said platform; if said member chooses to attend said bidding activity, said member determining whether to apply for a credit amount; and
    if said member chooses not to apply for a credit amount, said member becoming a member without a credit amount and directly attending a bidding activity of said platform.

5. The method according to claim 3, wherein if said member does not qualify for said credit amount, said member directly attends a bidding activity of said platform.

6. The method according to claim 1, wherein executing a bidding activity further comprises:

    a bidding activity beginning;

said member inputting into said bidding interface a number of terms, a contribution amount and a bid price;
said platform checking data input by said member; if said data is correct, said platform accepting said data and continuing to check said credit amount of said member; if said credit amount is sufficient, said platform executing a bidding activity; if said member wins in said bidding activity, said member becoming a borrower member;
said platform checking data input by said member; if said data is incorrect, said platform not accepting said data, said member determining whether to continue bidding; if said member chooses not to bid any more, said member logging-out from said platform; if said member chooses to bid again, said member returning to input into said bidding interface a number of terms, a contribution amount and a bid price; and
said administrating server of said platform storing results of bidding into a bidding information module.

7. The method according to claim 6, wherein in said platform checking said credit amount of said member, if said credit amount is insufficient, said member becomes a depositor member.

8. The method according to claim 6, wherein in said platform executing a bidding activity, if said member fails in bidding, said member determines whether to input a new bid price again; if said member chooses not to input a new bid price, said member becomes a depositor member.

9. The method according to claim 8, wherein if said member chooses to input a new bid price, said member returns to said bidding interface.

10. The method according to claim 6, wherein in said member inputting a bid price into said bidding interface, said administrating server of said platform sets a lower limit and an upper limit for said bid price.

11. The method according to claim 6, wherein in said member inputting a number of terms into said bidding interface, said administrating server of said platform sets a data range for all said terms and an interval limit for each two said terms.

12. The method according to claim 6, wherein in said member inputting a contribution amount into said bidding interface, said administrating server of said platform sets, a credit value of said member is set to be an upper limit for a sum of all said contribution amounts; said credit value is said credit amount of said member plus a sum of deposits said member has delivered into said platform.

13. The method according to claim 1, wherein in processing settlement and delivery of a bidding result, said administrating server of said platform retrieves bidding data from a bidding information module to process settlement and delivery of depositor members and borrower members.

14. The method according to claim 13, wherein in said settlement and delivery of a depositor member, said platform settles a current payable of said depositor member, and said depositor member delivers said current payable into said platform.

15. The method according to claim 13, wherein in said settlement and delivery of a borrower member, said platform settles a receivable of said borrower member and then delivers said receivable to said borrower member.

16. A system for an online customer-directed interest rate deposit and loan platform, comprising:

an administrating server linking to members via a network and a communication device, processing bidding activities of said platform, and storing various data into a database;
a member information module conducting member information acquired by said administrating server, wherein said platform uses information of said member information module to administrate registration, log-in, and credit amount application of members;
a bidding information module conducting bidding-related information, established by said administrating server comprising members' bidding data and bidding results;
a deposit and loan fund flow module conducting fund flow of depositors and borrowers and interest rates of bids;
a settlement and delivery module conducting settlement and delivery data of said platform, wherein said platform processes settlement and delivery for members interrupting their biddings and members completing their biddings and stores related data into said settlement and delivery module; and
a database storing the data from said members and said modules.

**17.** The system for an online customer-directed interest rate deposit and loan platform of claim 16, the communication device comprising a computer, a cellular telephone, or a personal digital assistant.

**18.** The system for an online customer-directed interest rate deposit and loan platform of claim 16, the network comprising a wired network, a wireless network, or a satellite network.

Logging into platform ~101

Applying for a credit amount ~102

Bidding in platform ~103

Platform processing settlement and delivery ~104

## Fig.1

Platform approving
membership    ~201

Linking to platform    ~202

Inputting account number
and password    ~203

Inputting
wrong data

Platform verifying
membership    ~204

N consecutive wrong
inputs

Confirmed

Contacting
service
center    ~206

Completing log-in process    ~205

**Fig.2**

~301

**No**

~302

Attend bidding activities?

Looking up data in platform

**Yes**

~303

**No**

~304

Apply for a credit amount?

Member without a credit amount

**Ye**

~305

Online examination

Not approved

Approved

Acquiring a credit amount

~306

Bidding in platform

~307

# Fig.3

**Fig.4**

```
┌─────────────────────────────────┐
│                                 │
│        Depositor member         │      ~501
│                                 │
└─────────────────────────────────┘
                 │
                 │
                 ▼
┌─────────────────────────────────┐
│                                 │
│ Platform settling payable of depositor member │
│                                 │      ~502
└─────────────────────────────────┘
                 │
                 │
                 ▼
┌─────────────────────────────────┐
│       Borrower delivering       │
│                                 │
│      current payable to         │      ~503
│                                 │
│          platform               │
└─────────────────────────────────┘
```

# Fig.5

| Borrower member | ~601 |

Platform settling receivable of borrower member ~602

| Platform delivering receivable to borrower member | ~603 |

**Fig.6**

Fig.7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 20060224502 A1